# EUROPÄISCHE PATENTANMELDUNG

(11) **EP 3 308 648 A1**
(43) Veröffentlichungstag der Anmeldung: **18.04.2018**
(21) Anmeldenummer: 17195285.6
(22) Anmeldetag: 06.10.2017
(51) Int. Cl.: A21B 3/02, F24C 15/02

(54) **DICHTUNGSSYSTEM FÜR TÜREN VON BACKÖFEN ODER ÄHNLICHEM**

(30) Priorität: 17.10.2016 DE 102016119745
(71) Anmelder: MIWE Michael Wenz GmbH, 97450 Arnstein (DE)
(72) Erfinder: Reuter, Christian, 97450 Altbessingen (DE); Pfeuffer, Bernd, 97776 Obersfeld (DE)
(74) Vertreter: Freischem & Partner Patentanwälte mbB

(57) **Zusammenfassung**

Die Erfindung betrifft eine Vorrichtung zur Behandlung von Lebensmitteln, insbesondere Backofen, mit
• einem Gehäuse,
• einer an dem Gehäuse verschwenkbar befestigten Tür (1) zum Verschließen einer Öffnung des Gehäuses,
• einer Dichtung (32) im unteren Bereich der Tür (1), mit der die Tür (1) gegenüber einer Bodenfläche abgedichtet ist.

Aufgabe der Erfindung ist es, eine Tür für ein Gerät zur Behandlung von Lebensmitteln derart weiterzubilden, dass auf die Behandlung der Lebensmittel positiv beeinflusst werden kann.

Diese Aufgabe wird dadurch gelöst, dass an der Tür (1) mindestens ein Antriebselement, z.B. ein Pneumatikzylinder (31), angeordnet ist, mit dem die Dichtung (32) von einer Dichtstellung, in der sie gegen die Bodenfläche anliegt, in eine Öffnungsstellung, in der sie einen Abstand zur Bodenfläche aufweist, gebracht wird.

## Beschreibung

Die Erfindung betrifft eine Vorrichtung zur Behandlung von Lebensmitteln, insbesondere einen Backofen, mit
- einem Gehäuse, welches eine Öffnung aufweist,
- einer an dem Gehäuse verschwenkbar befestigten Tür zum Verschließen der Öffnung des Gehäuses,
- einer Dichtung im unteren Bereich der Tür, mit der die Tür gegenüber einer Bodenfläche abgedichtet ist.

Insbesondere betrifft die Erfindung eine Backofentür, bei der das Gehäuse aus einer wärmeisolierenden Wand gebildet und die Bodendichtung wärmebeständig ausgebildet ist. Die Tür kann aber auch für einen Gärschrank bestimmt sein, in dem Teiglinge bei vorgegebener Atmosphäre gären. Auch kann die Tür für ein Gargerät bestimmt sein, das Lebensmittel mit Dampf gart. Auch Kühlzellen, in denen Lebensmittel gekühlt werden, werden an der Tür abgedichtet, so dass die Erfindung auch für Kühlzellen verwendet werden kann. Die Tür kann weitere Dichtungen aufweisen, die im Umfangsbereich der Tür verlaufen und die seitlichen Bereiche und den oberen Bereich des Gehäuses nach außen abdichten.

Die Tür ist in der Regel an seitlichen Scharnieren schwenkbar mit dem Gehäuse verbunden. Es ist gewünscht, die Bodendichtung beim Auf- und Zuschwenken von der Bodenfläche abzuheben. Dadurch wird der Widerstand beim Auf- und Zuschwenken der Tür verringert und der Verschleiß der Dichtung vermieden.

Die Druckschrift JP 2000 045655 A schlägt eine luftdichte Tür vor, deren Scharniere die Tür beim Zuschwenken der Tür absenken. So wird die Bodendichtung automatisch beim Öffnen der Tür vom Boden abgehoben. Dies wird dadurch erreicht, dass aufeinander drehende Hülsen der Scharnierteile gegeneinander verdrehbare, schräge Stirnflächen aufweisen.

Die Druckschrift FR 2 262 912 A zeigt eine Tür für einen Gärschrank mit rechts und links angeordneten Schließhebeln. Die Schließhebel öffnen und schließen seitliche Türriegel. Gleichzeitig werden über die seitlichen Schließhebel Schubstangen eines Schubstangenantriebs bewegt, welche eine Bodendichtung anheben und absenken. So wird beim Entriegeln der Tür die Bodendichtung von der Bodenfläche abgehoben, so dass sie beim Aufschwingen der Tür die Bodenfläche nicht berührt.

Die CH 552 775 A und die DE 43 22 467 C1 offenbaren beide Vorrichtungen mit Behandlungskammern, welche durch motorisch angetriebene Türen verschließbar sind. Beim Schließen der Türen werden auch die an den Türen starr befestigten Dichtungen in ihre abdichtende Schließstellung bewegt.

Aufgabe der Erfindung ist es, eine Tür für ein Gerät zur Behandlung von Lebensmitteln derart weiterzubilden, dass die Behandlung der Lebensmittel positiv beeinflusst werden kann.

Diese Aufgabe wird dadurch gelöst, dass an der Tür mindestens ein Antriebselement angeordnet ist, mit dem die Dichtung unabhängig von der Schließ- oder Öffnungsbewegung der Tür bzw. des Türriegels von einer Dichtstellung, in der sie gegen die Bodenfläche anliegt, in eine Öffnungsstellung, in der sie einen Abstand zur Bodenfläche aufweist, gebracht wird.

Die Dichtung ist derart beweglich an der Tür befestigt, dass sie von einer Dichtstellung, in der sie gegen die Bodenfläche anliegt, in eine Öffnungsstellung bringbar ist, in der sie einen Abstand zur Bodenfläche aufweist. Das Antriebselement kann ein pneumatisches, hydraulisches oder elektrisches Antriebselement sein. Durch das Antriebselement kann die Dichtung zu beliebigen Zeitpunkten gegen die Bodenfläche gedrückt oder davon abgehoben werden. Das Verlagern der Dichtung in die Dichtstellung ist nicht von der Schließ- oder Öffnungsbewegung der Tür bzw. der Schließ- oder Öffnungsbewegung des Türriegels abhängig. Somit kann die Dichtung auch während des Backvorgangs von der Bodenfläche abgehoben werden. Im Bereich des unteren Türspalts entsteht dadurch eine Öffnung, durch welche Frischluft in den Backraum des Backofens einströmen kann. Diese Frischluftöffnung kann beispielsweise beim Entschwaden verwendet werden, bei dem ein Backschwaden aus dem Backraum ausgetrieben wird. Grundsätzlich sollte bei jedem Bewegen der Tür die Dichtung von der Bodenfläche abgehoben sein. Hierdurch werden Reibung und Verschleiß reduziert oder vermieden. Dagegen kann die Dichtung gegen den Boden gedrückt werden, wenn die Tür vollständig geöffnet ist. In diesem Fall wirkt die Dichtung als Halteelement, welches ein ungewolltes Schließen der Tür vermeidet.

Um das Antriebselement im gewünschten Zeitpunkt zu aktivieren, kann das Antriebselement mit einer Steuervorrichtung des Ofens verbunden sein, welche das Antriebselement zu vorgegebenen Zeitpunkten oder in Abhängigkeit von aufgenommenen Messwerten aktiviert.

Wie erwähnt, kann das Antriebselement ein pneumatisches Antriebselement, insbesondere ein Pneumatikzylinder, sein. Ein derartiges pneumatisches Antriebselement ist insbesondere dann vorteilhaft, wenn die Dichtung an der Tür eine Dichtleiste ist, die durch das pneumatische Antriebselement angehoben und abgesenkt wird.

In der Praxis kann ferner an der Tür mindestens eine Rückstellfeder angeordnet sein, welche die Dichtleiste in die Öffnungsstellung zieht. In diesem Fall kann das pneumatische Antriebselement ein einseitig wirkender Pneumatikzylinder sein, der die Schließbewegung der Dichtung bewirkt. Die Öffnungsbewegung der Dichtung wird bei drucklosen Pneumatikzylindern durch die Rückstellfeder bewirkt.

In der Praxis kann das pneumatische Antriebselement ferner ein aufblasbarer Dichtschlauch sein, welcher durch Aufblasen in die Dichtstellung und durch Ablassen der Luft in die Öffnungsstellung gebracht wird. Mit anderen Worten ist die Dichtung selbst das pneumatische Antriebselement, welches die Abdichtung mit der Bodenfläche bewirkt. Derartige Schlauchdichtungen sind bekannt. Dadurch, dass der Durchmesser der Schlauchdichtung durch Aufblasen vergrößert wird, wird die untere abdichtende Oberfläche der Schlauchdichtung gegen die Bodenfläche bewegt. Es kann zu beliebigen Zeitpunkten ein dichtes Abschließen mit der Bodenfläche bewirkt werden. Durch Ablassen der Luft aus der Dichtwulst kann der Durchmesser verkleinert werden, sodass die Dichtung vom Boden abhebt.

In der Praxis kann an der Tür ferner mindestens ein Antriebselement angeordnet sein, mit dem die Dichtung an einem seitlichen oder oberen Rand der Tür von einer Dichtstellung, in der sie gegen die gegenüberliegende Dichtfläche des Gehäuses anliegt, in eine Öffnungsstellung gebracht wird, in der sie einen Abstand zur gegenüberliegenden Dichtfläche aufweist. Das Andrücken der Dichtung kann die Dichtwirkung steigern, ohne das Öffnen der Tür zu behindern, weil beim Öffnen der Tür die Dichtungen von den jeweiligen, den Dichtungen zugeordneten Dichtflächen des Gehäuses fort bewegt werden.

Die pneumatische Dichtung kann ferner mit einem pneumatischen Riegelsystem gekoppelt werden. In diesem Fall weist die hier beschriebene Vorrichtung folgende Merkmale auf
- ein Riegelelement ist an der Tür beweglich angeordnet,
- an dem Gehäuse ist ein Widerlager für das Riegelelement angeordnet,
- eine Betätigungsvorrichtung bewegt das Riegelelement von einer Schließstellung in eine Öffnungsstellung und zurück, wobei das Riegelelement in der Schließstellung durch das Widerlager gehalten wird und in der Öffnungsstellung vom Widerlager gelöst ist,
- die Betätigungsvorrichtung für das Riegelelement ist ein pneumatisches Antriebselement.

Die vorliegende Erfindung betrifft insbesondere Produktionsbacköfen für die Produktion von Backwaren in handwerklichen Bäckereien oder Industriebetrieben. Derartige Produktionsbacköfen weisen in der Regel Backkammern oder übereinander liegende einzelne Herde auf, die sich über eine Höhe von 1,8 m und mehr erstrecken. Es sind Produktionsbacköfen mit verschiedenen Bauformen bekannt. Eine erste Bauform ist ein mit Umluft betriebener Stikkenofen. Dieser weist eine durch eine Tür verschlossene Backkammer auf, in die ein Gebläse Heißluft einbläst. Durch die Tür kann ein Backwagen mit in mehreren Ebenen angeordneten Backblechen, auf denen zu backende Teiglinge abgelegt sind, in den Ofen eingeschoben und wieder herausgezogen werden. Der Ofen weist eine Drehvorrichtung auf, mit dem der Backwagen in der Backkammer gedreht werden kann, um eine gleichmäßige Bräunung der auf dem Backwagen befindlichen Teiglinge zu erzielen. Eine andere Bauform ist ein sogenannter Wagenofen mit übereinander angeordneten Radiatoren, die in die Backkammer ragen. Die Radiatoren werden beheizt, zum Beispiel durch Thermoöl. Über die Höhe der Backkammer von etwa 2 m werden meist sieben bis zehn Radiatoren verteilt, die sich in gleichmäßigem Abstand zueinander jeweils in einer horizontalen Ebene in die Backkammer erstrecken. Die Radiatoren sind an der hinteren Wand der Backkammer befestigt, welche der Tür gegenüberliegt. Backwagen mit seitlichen Streben, die sich zwischen der seitlichen Wand der Backkammer und dem benachbarten Seitenrand der Radiatoren erstrecken, werden in die Backammer eingeschoben und weisen Backgutträger, üblicherweise Bleche mit Teiglingen, auf.

Im Fall von Stikkenöfen werden auf Backwagen z.B. in neun oder mehr Ebenen Backbleche mit Teiglingen angeordnet. Die Backwagen werden in die Backkammer des Backofens gefahren. Der Backofen ist meist als Umluft-Backofen ausgebildet, bei dem ein Gebläse die Luft in der Backkammer umwälzt und einem Heizregister zuführt, welches die Luft auf die gewünschte Temperatur aufheizt.

Die Erfindung ist aber nicht auf Produktionsbacköfen beschränkt, sondern kann auch bei kleineren Backöfen, z.B. Ladenbacköfen, eingesetzt werden. Die vorliegende Erfindung betrifft allgemein eine Öffnungs- und Schließvorrichtung für Türen von Vorrichtungen zur Behandlung von Lebensmitteln. Derartige Vorrichtungen umfassen neben Backöfen z.B. auch Gärkammern, in welche Stikkenwagen mit Teig-Rohlingen eingebracht werden, um bei vorgegebener Temperatur und Feuchtigkeit ein optimales Gären des Teiges zu ermöglichen, aber auch Kühlkammern, in denen Lebensmittel tiefgekühlt werden, um sie für einen langen Zeitraum haltbar zu machen oder um einen Gärvorgang zu unterbrechen.

Bei derartigen Vorrichtungen verschließt die Tür einen Innenraum innerhalb des Gehäuses dicht. Zu diesem Zweck ist im Bereich des Randes der Öffnung, welche durch die Tür verschlossen wird, in der Regel eine Dichtung vorgesehen. Das Riegelelement zieht die Tür meist gegen diese Dichtung. Eine gute Abdichtung der Tür und somit der Öffnung zum Innenraum des Gehäuses ist erforderlich, um innerhalb des Gehäuses die erforderliche Temperatur oder Luftfeuchtigkeit zu erreichen und aufrecht zu erhalten.

In der Praxis sind Türen für Backöfen und ähnliche Vorrichtungen mit herkömmlichen Schließmechanismen versehen. An der Tür selber ist ein Griff oder ein Drücker angebracht, der in der Regel drehbar gelagert ist. Durch ein Verdrehen des Griffs wird eine mechanische Bewegung auf das Riegelelement übertragen, welche das Riegelelement in die Öffnungsstellung oder in die Schließstellung bewegt.

Dadurch, dass die Betätigungsvorrichtung für das Riegelelement ein pneumatisches Antriebselement ist, lässt sich das Verschließen der Tür mit geringem Aufwand automatisieren. Insbesondere wenn der Backofen bereits mit einer pneumatischen Steuervorrichtung versehen ist, welche das Aktivieren der Dichtung ermöglicht, ist zusätzlich das pneumatische Antriebselement für das Riegelelement leicht zu realisieren.

Da die Betätigungsvorrichtung durch ein pneumatisches Antriebselement gebildet wird, das an der Tür angebracht ist, kann die Konstruktion der Tür und des Schließmechanismus für die Tür im Wesentlichen unverändert bleiben. Herkömmliche Schließsysteme mit automatisch angetriebenen Schließvorrichtungen im Bereich des Türrahmens würden eine deutlich höhere konstruktive Änderung der existierenden Tür zur Folge haben. Die Verwendung eines pneumatischen Antriebselements zur Betätigung des Riegelelements trägt der üblichen Ausstattung professioneller Backbetriebe Rechnung. In derartigen Backbetrieben gehören mittlerweile Druckluftversorgungsleitungen zum Standard. Daher ist die Verwendung von Druckluft aus einer bereits fest installierten Druckluftversorgungsleitung zur Automatisierung der Verriegelung einer Tür eines Backofens oder einer ähnlichen Lebensmittel-Behandlungsvorrichtung besonders vorteilhaft.

In der Praxis kann die Tür mehr als ein Riegelelement aufweisen. Die meisten rechteckigen Türen weisen auf einer Seite in der oberen und unteren Ecke ein Scharnier auf und auf der anderen Seite im Bereich der gegenüberliegenden Ecken jeweils einen Riegel. Es kann aber auch ein weiterer Riegel in mittlerer Höhe der Tür an der den Scharnieren gegenüberliegenden Seite angeordnet werden.

Als pneumatisches Antriebselement ist insbesondere ein Pneumatikzylinder geeignet. Es ist aber auch eine Verwendung weiterer Antriebselemente möglich, z.B. pneumatische Drehantriebe, elektrische Linearantriebe oder Drehantriebe sowie hydraulische Linearantriebe oder Drehantriebe.

In der Praxis kann die Vorrichtung einen Signalgeber umfassen, der bei der Bewegung der Tür in ihre geschlossene Stellung ein Signal abgibt, das die Druckluftzufuhr zum pneumatischen Antriebselement aktiviert. Der Signalgeber kann beispielsweise ein Kontaktschalter oder ein berührungsloser Schalter sein. Sobald die Tür von einer Bedienperson in die geschlossene Stellung gedrückt wird, wird der Signalgeber aktiviert und aktiviert seinerseits die Druckluftzufuhr zum pneumatischen Antriebselement. Diese Automatisierung ist bei Vorrichtungen wie Backöfen besonders vorteilhaft. Insbesondere während der Entnahme von Stikkenwagen aus dem Innenraum des Gehäuses ist es für die Bedienperson eine besondere Erleichterung, wenn die Tür automatisch verriegelt und von der Bedienperson lediglich in die Schließstellung gedrückt werden muss.

In der Praxis kann das Gehäuse einen Druckluftanschluss aufweisen, der mit einer externen Druckluftquelle verbindbar ist, wobei eine Druckluftleitung von dem Druckluftanschluss zum pneumatischen Antriebselement verläuft. Wenn die Tür mittels eines Scharniers an dem Gehäuse angelenkt ist, kann die Druckluftleitung durch das Scharnier verlaufen. Es können auch mehrere Druckluftleitungen durch das Scharnier hindurch verlaufen. Aktuell eingesetzte Türen für Backöfen weisen Türen aus Edelstahl auf, die im Bereich eines Randes an der oberen und unteren Ecke jeweils eine Gelenkachse aufweisen. Die Gelenkachse wird an einem Scharnierteil am Gehäuse des Backofens drehbar gelagert. Diese Gelenkachse kann hohl sein, wobei ein erstes Ende der Gelenkachse mit dem Druckluftanschluss und ein zweites Ende der Gelenkachse mit dem pneumatischen Antriebselement verbunden ist. Mit anderen Worten führt eine erste Druckluftleitung im Bereich des Backofengehäuses von dem Druckluftanschluss zu dem ersten Ende der Gelenkachse. Innerhalb der Tür führt eine zweite Druckluftleitung von dem zweiten Ende der Gelenkachse zu dem pneumatischen Antriebselement. Auf diese Weise lässt sich unter Verwendung der herkömmlichen Konstruktionselemente eines Backofens die Zufuhr von Druckluft zu einem Pneumatikantrieb realisieren, der an der schwenkbaren Tür angeordnet ist. Alternativ können die Druckluftleitungen nahe dem Scharnier aus dem Rahmen in die Tür geleitet werden. Durch diese Maßnahme ist die Relativbewegung zwischen Tür und Rahmen im Bereich der Druckluftleitungen möglichst klein.

In der Praxis kann die Vorrichtung ein Rückstellelement aufweisen, welches das Riegelelement in die Öffnungsstellung bewegt. In der Praxis kann ein einfach wirkender pneumatischer Zylinder verwendet werden. In dem Zylinder ist ein verschiebbarer Kolben angeordnet, der von einer Seite mit Druck beaufschlagt werden kann. Von der anderen Seite wirkt eine Rückstellfeder auf den Kolben. Wenn kein Druck auf die erste Seite des Kolbens wirkt, wird dieser durch die Rückstellfeder in seine Grundstellung bewegt. In dieser Grundstellung befindet sich dann das Riegelelement in der Öffnungsstellung. Diese Anordnung hat den Vorteil, dass bei Ausfall der Druckluftzufuhr die Tür des Backofens geöffnet werden kann. Dies ist beispielsweise vorteilhaft, wenn der Backofen zu Zwecken der Wartung von der Versorgung mit Energie und Druckluft getrennt wird. Durch die mittels der Rückstellfeder bewirkte Bewegung des Riegelelements in die Öffnungsstellung lässt sich auch ein Notschalter realisieren. Das pneumatische Antriebselement kann ein Entlüftungsventil aufweisen. Das Entlüftungsventil kann durch einen Notschalter betätigt werden. Der Notschalter kann insbesondere an der Innenseite der Tür angeordnet sein, welche in geschlossenem Zustand dem Innenraum des Gehäuses zugewandt ist. Wenn die Tür unbeabsichtigt verschlossen wird, während sich ein Mensch im Innenraum des Gehäuses befindet, kann sich dieser durch Betätigen des Notschalters unverzüglich befreien.

In der Praxis kann die Vorrichtung eine zusätzliche Verbindungsanordnung aufweisen, welche mit einem Türgriff verbindbar ist, so dass die Bewegung des Türgriffs auf das Riegelelement übertragen wird. Durch eine derartige Verbindungsanordnung können die in der Regel pneumatisch angetriebenen Riegelelemente zusätzlich oder alternativ manuell angetrieben werden. Ferner kann die Vorrichtung in der Praxis ein erstes Kopplungselement aufweisen, welches das pneumatische Antriebselement mit dem Riegelelement verbindet und zum Trennen der Verbindung lösbar ausgebildet ist. Dieses erste Kopplungselement kann getrennt werden, wenn die Verbindungsanordnung für die manuelle Betätigung der Tür verbunden ist. In der Praxis kann ferner ein zweites Kopplungselement vorgesehen sein, welches das Rückstellelement mit dem Riegelelement verbindet und zum Trennen der Verbindung lösbar ausgebildet ist. Auch das Rückstellelement sollte von dem Riegelelement getrennt sein, wenn die manuelle Betätigung realisiert ist. Eine derartige Tür kann also wahlweise pneumatisch betrieben werden, wenn die Druckluftversorgung sichergestellt ist. Ist die Druckluftversorgung gestört oder ist keine Druckluftleitung vorhanden, kann die Tür auf manuelle Betätigung umgerüstet werden. Der Hersteller des Backofens oder der ähnlichen Vorrichtung kann folglich mit einer Türkonstruktion sämtliche Anwendungsfälle, d.h., sowohl die manuelle Ver- und Entriegelung, als auch die pneumatische Ver- und Entriegelung abdecken.

Es ist aber hervorzuheben, dass die pneumatisch betätigbare Dichtung auch ohne pneumatisches Riegelsystem umgesetzt werden kann und umgekehrt.

Praktische Ausführungsformen und Vorteile der Erfindung sind nachfolgend im Zusammenhang mit den Zeichnungen beschrieben.
Fig. 1 zeigt eine Vorderansicht eines Stikkenofens.
Fig. 2 zeigt eine schematische Rückansicht einer Tür des Stikkenofens aus Fig. 1.
Fig. 3 zeigt eine dreidimensionale Ansicht des unteren Bereichs der Tür aus Fig. 2 mit Dichtung in der Öffnungsstellung.
Fig. 4 zeigt eine Schnittansicht des unteren Bereichs der Tür aus Fig. 3.
Fig. 5 zeigt eine der Fig. 3 entsprechende Darstellung des unteren Bereichs der Tür mit Dichtung in der Dichtstellung.
Fig. 6 zeigt eine Schnittansicht des unteren Bereichs der Tür aus Fig. 5.
Fig. 7 zeigt eine Schnittansicht des unteren Bereichs einer Tür mit Schlauchdichtung.
Fig. 8 zeigt eine der Fig. 7 entsprechende Darstellung mit aufgeblasener Schlauchdichtung.
Fig. 9 zeigt eine Vorderansicht einer alternativen Ausführungsform einer Tür des Stikkenofens aus Fig. 1 ohne Deckblech.
Fig. 10 zeigt eine der Fig. 9 entsprechende Ansicht einer alternativen Ausführungsform einer Tür.
Fig. 11 zeigt eine der Fig. 10 entsprechende Ansicht einer konstruktiven Ausgestaltung der Tür.
Fig. 12 zeigt eine perspektivische Detailansicht der Tür aus Fig. 11.

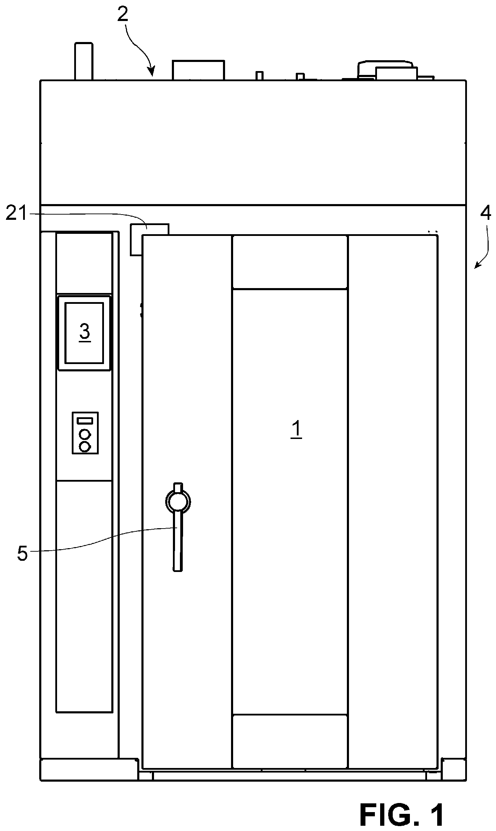

Die vorliegende Entwicklung wird nachfolgend in Verbindung mit einem Backofen beschrieben. Der Fachmann erkennt aber, dass die hier beschriebenen Merkmale auch an den Gehäusen von Gärschränken oder Kühlzellen oder sonstigen Einrichtungen für die Behandlung von Lebensmitteln eingesetzt werden können. Fig. 1 zeigt die Vorderansicht des Gehäuses eines Backofens 2, der im vorliegenden Fall als Stikkenofen ausgebildet ist. Der Backofen 2 weist ein Gehäuse 4 mit einer Tür 1 auf. Die Tür 1 verschließt die Öffnung einer Backkammer, die im Ofengehäuse 4 angeordnet ist. Durch die Tür 1 werden ungebackene Teiglinge in die Backkammer eingebracht und gebackene Backwaren entnommen. Links von der Tür 1 ist ein Eingabe- und Anzeigefeld 3 angeordnet, das mit der Steuerelektronik des Backofens 2 verbunden ist. Das Eingabe- und Anzeigefeld 3 ist im vorliegenden Fall als Touchscreen ausgebildet und dient der Eingabe und Anzeige von Betriebsparametern des Backofens 2. Die Backkammer hat eine Höhe von etwa 2 m und ist zur Aufnahme von Backwagen vorgesehen, die sich weitgehend über die gesamte Höhe der Backkammer erstrecken. Folglich ist auch die Tür 1 etwa 2 m hoch.

In der linken Hälfte der Tür 1 ist etwa auf halber Höhe ein Türgriff 5 angeordnet. Bei Türen gemäß dem Stand der Technik war der Türgriff 5 drehbar, um Riegelelemente 13 der Tür 1 zu bewegen. Bei dem hier beschriebenen Ofen 2 kann der Türgriff 5 bei aktivierter pneumatischer Verriegelung festgelegt sein und nur noch dem Ergreifen der Tür 1 dienen, um diese zuzudrücken oder aufzuziehen. Er kann auch eine von der Figur 1 abweichende Form aufweisen. Außerdem kann der Türgriff 5, wie weiter unten beschrieben, fakultativ mit den Riegelelementen 13 gekoppelt werden, um diese anzutreiben.

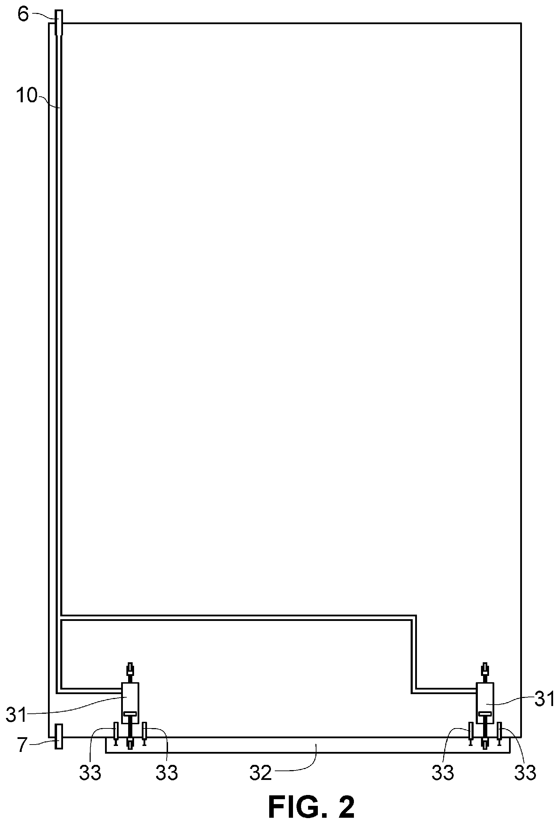

Die Figur 2 zeigt eine schematische Rückansicht der Tür 1, das heißt, eine Ansicht der von dem Backraum in dem Backofen 2 aus sichtbaren Seite der Tür 1. Am linken Rand der Tür 1 sind die Gelenkachsen 6, 7 zu erkennen. Durch die obere Gelenkachse 6 führt eine Druckluftleitung 10, die weiter unten näher beschrieben wird. Die Druckluftleitung 10 führt zu zwei Pneumatikzylindern 31 im Bereich des unteren Randes der Tür 1. Die Pneumatikzylinder 31 sind am oberen Ende schwenkbar an der Tür 1 befestigt. Das untere Ende ist an einer gelenkigen Anlenkung an einer Dichtleiste 32 befestigt. Die Dichtleiste 32 ist ihrerseits schwenkbar am unteren Rand der Tür 1 befestigt und bildet die Dichtung der Tür 1 gegenüber einer darunter befindlichen Bodenfläche. Die Pneumatikzylinder 31 bilden die Antriebselemente für die Dichtleiste 31 und ermöglichen es, die Dichtleiste 31 gegenüber der Tür 1 nach unten in die Dichtstellung zu verschwenken, in der sie gegen die Bodenfläche anliegt, bzw. nach oben in die Öffnungsstellung, in der sie einen Abstand zur Bodenfläche aufweist.

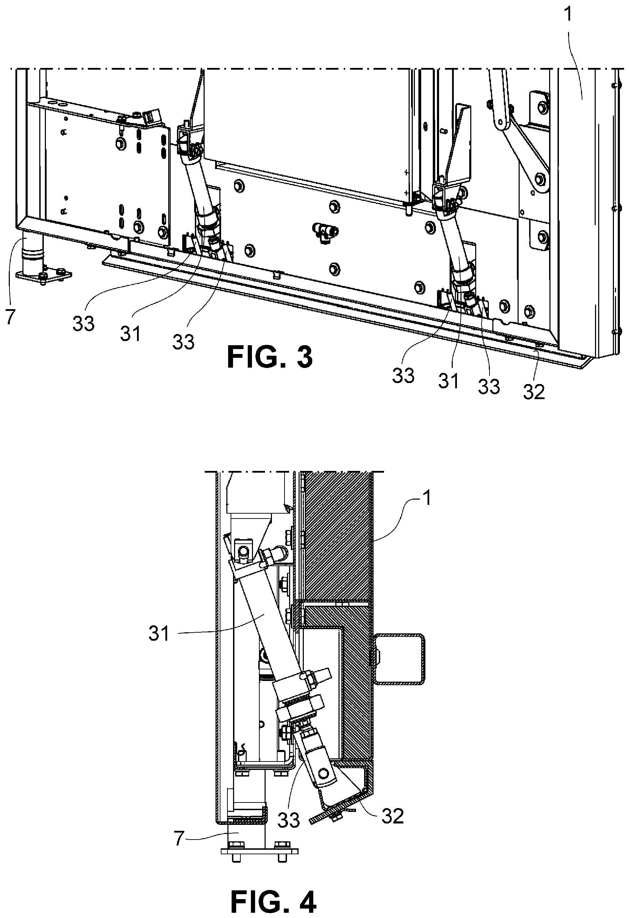

Die konstruktive Ausgestaltung des unteren Türrandes ist in den Figuren 3-6 dargestellt. In den Figuren 3 und 4 sind die pneumatischen Zylinder 31 drucklos und die Dichtleiste 32 in der Öffnungsstellung. Seitlich der pneumatischen Zylinder 31 sind Federelemente 33 zu erkennen, welche die Dichtleiste 32 in die in den Figuren 3 und 4 dargestellte Öffnungsstellung ziehen, in der sie am unteren Rand der Tür 1 nach oben verschwenkt und von der Bodenfläche abgehoben ist.

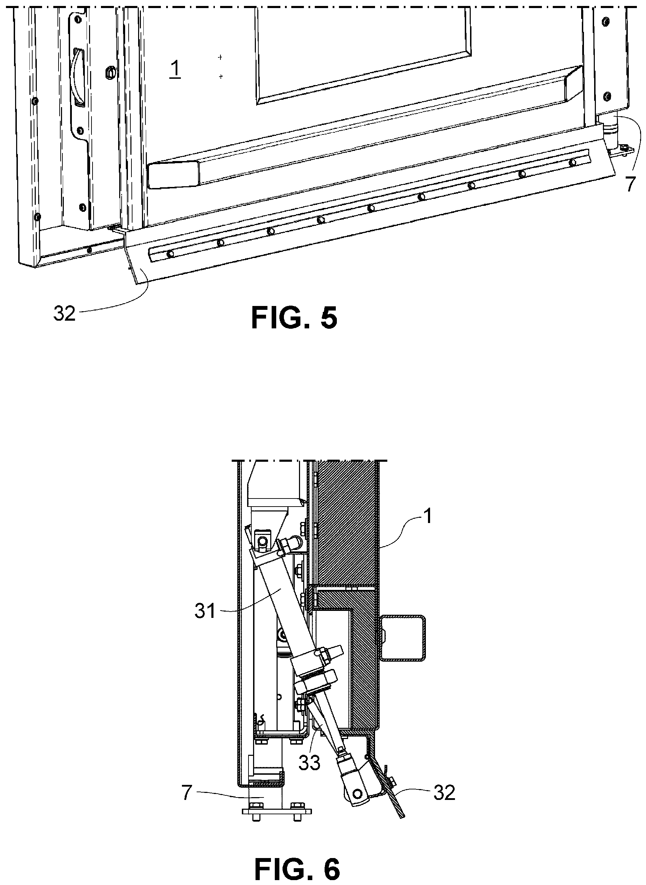

Die Figur 5 zeigt eine Ansicht der Außenseite des unteren Türrandes, an dem die Dichtleiste 32 zur Dichtstellung hin verschwenkt ist, und die Figur 6 zeigt eine entsprechende Schnittdarstellung. In den Figuren 5 und 6 sind die pneumatischen Zylinder 31 maximal ausgefahren. In dieser Stellung drücken sie die Dichtleiste 32 in die Dichtstellung gegen die Bodenfläche. Es sei darauf hingewiesen, dass die Dichtleiste 32 in den Figuren 5 und 6 über den unteren Totpunkt hinaus verschwenkt ist. In der Praxis wird die Dichtleiste 32 mit ihrem unteren Rand gegen die Bodenfläche geschwenkt, sodass die tatsächliche Dichtstellung erreicht wird, bevor die Dichtleiste 32 ihren unteren Totpunkt überschreitet.

Der Pneumatikzylinder 31 kann in jeder Stellung der Tür 1 und zu beliebigen Zeitpunkten betätigt werden, um die Dichtleiste 32 gegenüber der Tür 1 zu verschwenken. So kann die Dichtleiste 32 beispielsweise auch während des Backvorgangs geöffnet werden. Auch kann die Dichtleiste 32 bei geöffneter Tür 1 in die Dichtstellung bewegt werden, um die Tür 1 in der geöffneten Stellung zu arretieren.

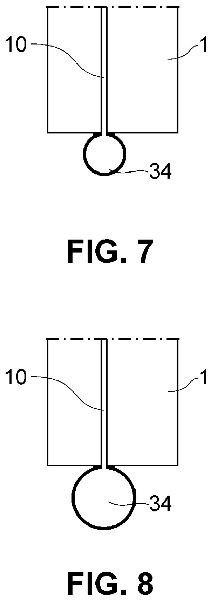

Die Figuren 7 und 8 zeigen eine alternative Ausführungsform der Dichtung. Die Dichtung besteht hier aus einem aufblasbaren Schlauch aus einem flexiblen Material. In Figur 7 ist die Luft aus dem Dichtschlauch 34 abgelassen. Eine Dichtwirkung gegenüber der Bodenfläche findet nicht statt. In Figur 8 ist der Dichtschlauch 34 aufgeblasen und hat einen vergrößerten Durchmesser. Auf diese Weise kann der Dichtschlauch 34 gegenüber der darunterliegenden Bodenfläche abdichten, indem seine untere Oberfläche gegen die unterhalb der Tür 1 liegende Bodenfläche bewegt und gedrückt wird. Wiederum kann die pneumatische Steuerung des Backofens durch die Druckluftleitung 10 zu beliebigen Zeitpunkten Luft zu dem Dichtschlauch 34 zuführen oder ablassen. Das Zusammenziehen des Dichtschlauchs 34 kann aufgrund der Eigenelastizität des Schlauchmaterials erfolgen. Mit anderen Worten bildet der Dichtschlauch 34 selbst das Antriebselement, welches durch Aufblasen die untere Dichtfläche gegenüber der Tür 1 nach unten und durch Luftablassen wieder nach oben bewegt.

Es ist auch möglich, die zuvor beschriebenen Antriebselemente für die Dichtungen nicht an dem unteren Rand der Tür sondern an einem seitlichen oder oberen Rand der Tür vorzusehen. In diesem Fall bewegen die Antriebselemente die Dichtungen gegen die jeweils zugeordneten Dichtflächen des Ofengehäuses und wieder von diesen Dichtflächen weg.

In den nachfolgenden Zeichnungen wird nun eine Tür mit pneumatischer Verriegelungsvorrichtung gezeigt und erläutert. Der Fachmann versteht, dass die pneumatisch betätigte Dichtung mit der pneumatischen Verriegelungsvorrichtung kombiniert und in einer einzigen Tür installiert werden kann.

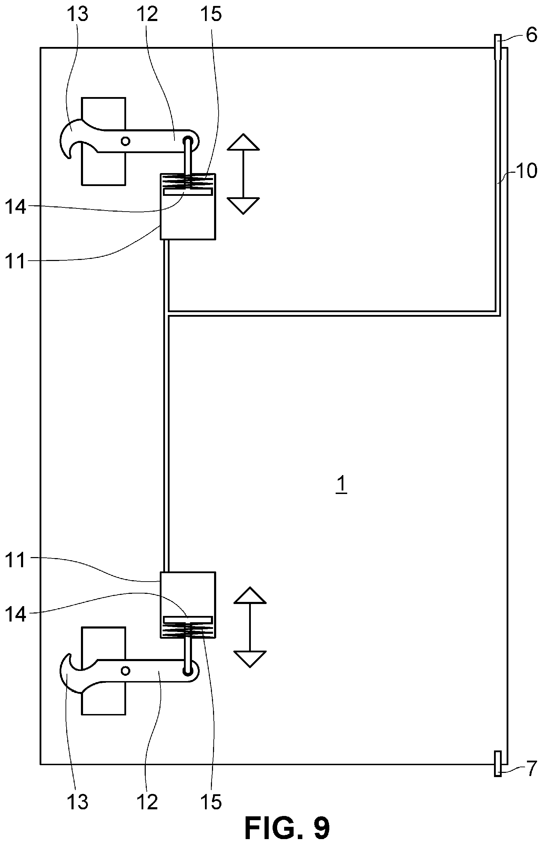

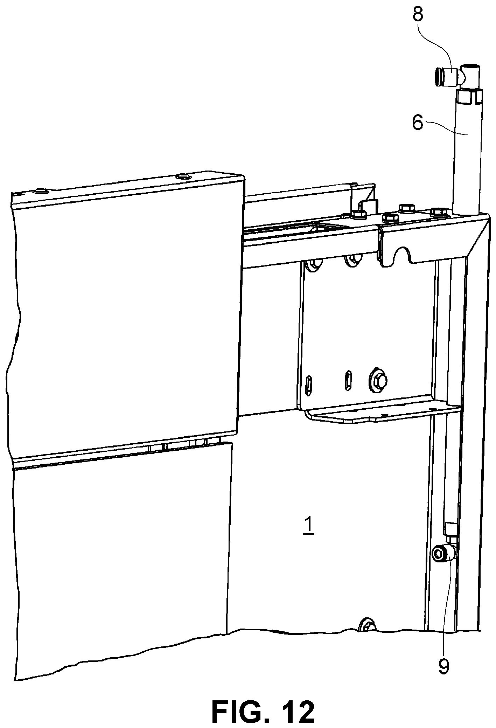

Figur 9 zeigt eine schematische Vorderansicht der Tür 1 mit einer ersten Ausführungsform der pneumatischen Verriegelung. Die Deckbleche sind hier weggelassen, damit die funktionalen Elemente sichtbar sind. Am rechten Rand der Tür 1 sind in der oberen und der unteren Ecke Gelenkachsen 6, 7 angeordnet, die drehbar in einem Scharnierteil am Gehäuse 4 des Backofens 2 gelagert sind. Die Gelenkachse 6 ist als Hohlwelle ausgebildet. Dies ist detaillierter in Figur 12 zu erkennen.

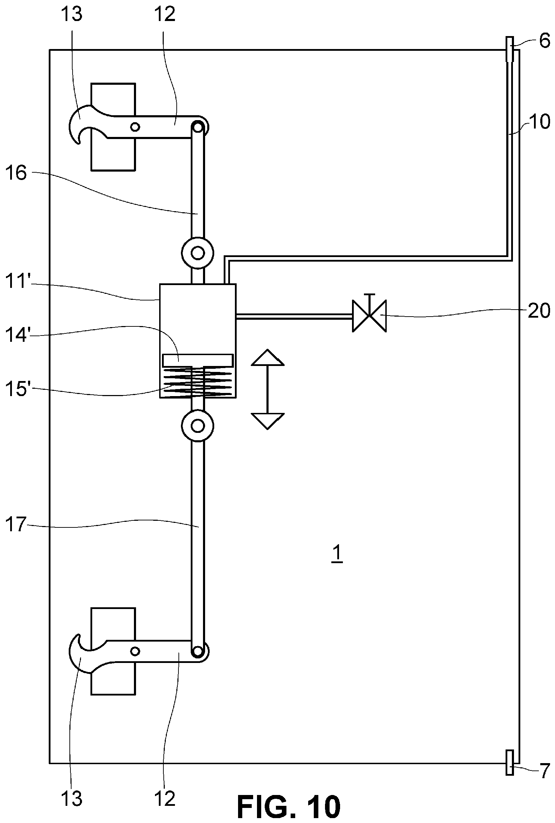

Die Figur 12 zeigt die obere rechte Ecke der Tür 1. Die Gelenkachse 6 wird von einem hohlen Stahlstift gebildet, an dessen Enden zwei Kupplungen 8, 9 für Druckluftschläuche angeordnet sind. An der oberen Kupplung 8 kann ein Druckluftschlauch angeschlossen werden, der innerhalb des Ofengehäuses 4 verläuft und mit einer externen Druckluftleitung 10 der Bäckerei verbunden ist. Mit der Kupplung 9 kann eine Druckluftleitung 10 oder 10' verbunden werden (siehe Figur 9 oder 10), welche zu mindestens einem pneumatischen Antriebselement an der Tür 1 führt.

Wieder unter Bezugnahme auf Figur 9 ist zu erkennen, dass die Druckluftleitung 10 zu zwei pneumatischen Zylindern 11 führt, welche über Hebel 12 mit Riegelelementen 13 der Tür 1 verbunden sind. Die Riegelelemente 13 wirken mit Widerlagern (nicht dargestellt) des Ofengehäuses 4 zusammen. In der in Figur 9 dargestellten Schließstellung greifen die Riegelelemente 13 in diese Widerlager ein und werden dort gehalten. Auf diese Weise wird die Tür 1 verschlossen. Dabei können die Riegelelemente 13 oder die Widerlager Schrägflächen aufweisen, welche die Tür 1 dicht gegen eine Dichtung am Ofengehäuse 4 ziehen.

Es ist zu erkennen, dass die Kolben 14 der pneumatischen Zylinder 11 weitgehend zu der der Mündung der Druckluftleitung 10 gegenüberliegenden Seite des pneumatischen Zylinders 11 verschoben sind. Folglich sind die Pneumatikzylinder 11 beide mit Druck beaufschlagt. Der durch die Druckluftleitung 10 zugeführte Luftdruck bewegt mittels der Pneumatikzylinder 11 die Riegelelemente 13 in ihrer Schließstellung.

Es ist zu erkennen, dass zwei einfach wirkende Pneumatikzylinder 11 verwendet werden. Luftdruck wird jeweils nur in den zur Mitte der Tür 1 hin liegenden Bereich der Pneumatikzylinder 11 zugeführt. Die Kolben 14 der Pneumatikzylinder 11 werden durch diesen Luftdruck jeweils von der Türmitte fort verschoben. Auf der dem mit Druck beaufschlagten Innenraum des Pneumatikzylinders 11 gegenüberliegenden Seite des Kolben 14 ist eine Druckfeder 15 in jedem der Pneumatikzylinder 11 angeordnet. Die Druckfeder 15 bewegt den Kolben 14 in dem jeweiligen Pneumatikzylinder 11 zur Mitte der Tür 1 hin. Somit werden die Riegelelemente 13 in die Öffnungsstellung geschwenkt, wenn die zwei Pneumatikzylinder 11 drucklos sind.

In Figur 10 ist eine der Figur 9 entsprechende Darstellung einer alternativen Ausführungsform einer Tür 1 mit pneumatischer Verriegelung zu erkennen. Hier ist ein großer Pneumatikzylinder 11' in der Mitte zwischen zwei Schubstangen 16, 17 angeordnet. Die obere Schubstange 16 ist mit dem oberen Hebel 12 des oberen Riegelelements 13 gekoppelt. Die untere Schubstange 17 ist mit dem unteren Hebel 12 des unteren Riegelelements 13 gekoppelt. Der durch die Druckluftleitung 10' zugeführte Luftdruck drückt den Kolben 14' nach unten. Die Rückstellfeder 15' drückt den Kolben 14' nach oben, wenn der Pneumatikzylinder 11' nicht mit Druck beaufschlagt ist.

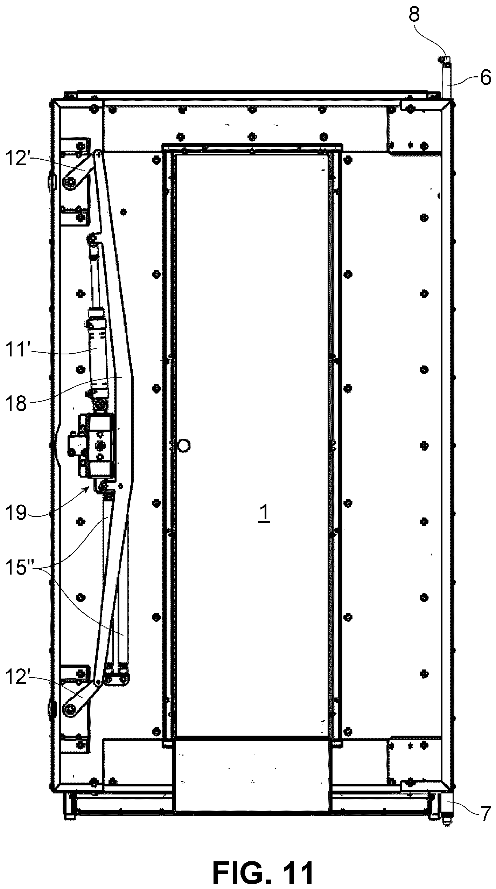

Die Figur 11 zeigt eine konstruktive Ausgestaltung einer Tür 1, die gemäß der schematischen Funktionsskizze der Figur 10 mit einem einzigen Pneumatikzylinder 11' versehen ist. Hier sind die Rückstellfedern 15" allerdings nicht in den Pneumatikzylinder 11' integriert, sondern als separate Zugfedern 15" ausgebildet und unterhalb des Türgriffs an einer zentralen Schubstange 18 angelenkt, welche die zwei Hebel 12' betätigt. Es ist zu erkennen, dass auf Höhe des Türgriffs 5 (Figur 1) ein Getriebe 19 angeordnet ist, welches mit der Schubstange 18 koppelbar ist. Über eine Schraubverbindung oder einen Steckzapfen kann dieses Getriebe 19 mit der Schubstange 18 gekoppelt werden. Die Schubstange 18 und das Getriebe 19 bilden dann eine Verbindungsanordnung, welche die Bewegung des Türgriffs auf die Riegelelemente 13 überträgt. Der Pneumatikzylinder 11' und die Rückstellfedern 15" können bei dieser Variante der Tür 1 ausgebaut werden. Hierzu müssen lediglich die Kopplungselemente gelöst werden, welche den Pneumatikzylinder 11' mit der Schubstange 18 bzw. die Rückstellelemente 15" (Federn) mit der Schubstange 18 verbinden. Die hier dargestellte Tür 1 kann folglich sowohl mit einer pneumatischen Betätigung der Riegelelemente 13, als auch mit einer manuellen, über den Türgriff 5 erfolgenden Betätigung der Riegelelemente 13 ausgerüstet werden.

In der Figur 10 ist ferner schematisch ein Entlüftungsventil 20 dargestellt, welches mit dem Pneumatikzylinder 11' gekoppelt ist. Diese Entlüftungsventil 20 ist mittels eines Notschalters betätigbar, der auf der Rückseite der Tür 1 angeordnet. Bei Betätigen des Notschalters wird über das Entlüftungsventil 20 die Luft aus dem Pneumatikzylinder 11' abgelassen. Der Kolben wird durch die Rückstellfeder 15' nach oben bewegt, so dass die Riegelelemente 13 in die Öffnungsstellung bewegt werden. Auf diese Weise kann eine Person, die in der Backkammer oder einem anderen durch die Tür 1 verschlossenen Raum eingeschlossen wird, die pneumatische Verriegelung deaktivieren und die Tür 1 öffnen.

In Figur 1 ist in der oberen linken Ecke der Tür 1 ein Signalgeber 21 dargestellt. Es kann sich um einen einfachen Druckschalter handeln, der durch die obere linke Ecke der Tür 1 betätigt wird. Es kann ebenfalls ein berührungsloser Signalgeber 21 vorgesehen sein, der bei Annäherung des Metalls der Tür 1 ein Signal abgibt. Aufgrund des Signals des Signalgebers 21 wird durch eine Steuerungseinheit die pneumatische Verriegelung der Tür 1 aktiviert. Deaktiviert wird die pneumatische Verriegelung der Tür 1 entweder durch das Entlüftungsventil 20 oder durch die Steuerungseinheit des Backofens 2 bei Beendigung eines Backvorgangs oder bei einem manuellen Beenden oder Unterbrechen des Backvorgangs.

Die Steuerungseinheit kann vorzugsweise als zentrale Steuerungseinheit ausgebildet sein, die sämtliche Steuerungsvorgänge des Backofens übernimmt und synchronisiert. Zum Beispiel können zum Öffnen des Ofens nicht nur die Pneumatikzylinder 11 oder 11' zum Entriegeln, sondern auch die pneumatischen Antriebe 31 oder 34 für die Dichtungen angesteuert werden. Es können weitere Öffnungen, z.B. Entschwadungsöffnungen oder Kaminöffnungen gleichzeitig geöffnet werden, um den Luftaustausch mit der Umgebung zu verbessern. Das Gleiche gilt beim Schließen des Ofens. Wenn die Dichtungen angepresst werden, können gleichzeitig Entschwadungsöffnungen oder Kaminöffnungen geschlossen werden. Auch die Betätigung und Dektivierung anderer funktionaler Baugruppen wie Brenner, Gebläse oder Schwadenapparat können durch die zentrale Steuerungseinheit derart erfolgen, dass jede Baugruppe in Bezug auf ein bestimmtes Ereignis wie Tür öffnen, Tür schließen, Beschwaden, Entschwaden etc. korrekt angesteuert wird.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: Tür
- 2: Backofen
- 3: Eingabe- und Anzeigefeld
- 4: Gehäuse, Ofengehäuse
- 5: Türgriff
- 6: Gelenkachse
- 7: Gelenkachse
- 8: Kupplung
- 9: Kupplung
- 10, 10': Druckluftleitung
- 11, 11': Pneumatikzylinder
- 12: Hebel
- 13: Riegelelement
- 14: Kolben
- 15, 15': Druckfeder, Rückstellfeder
- 15": Rückstellfeder
- 16: Schubstange
- 17: Schubstange
- 18: Schubstange
- 19: Getriebe
- 20: Entlüftungsventil
- 21: Signalgeber

- 31: Pneumatikzylinder, Antriebselement
- 32: Dichtung, Dichtleiste
- 33: Rückstellfeder
- 34: Dichtung, Schlauchdichtung, Antriebselement

## Patentansprüche

1. Vorrichtung zur Behandlung von Lebensmitteln, insbesondere Backofen (2), mit
• einem Gehäuse (4),
• einer an dem Gehäuse (4) verschwenkbar befestigten Tür (1) zum Verschließen einer Öffnung des Gehäuses (4),
• einer Dichtung (32, 34) im unteren Bereich der Tür (1), mit der die Tür (1) gegenüber einer Bodenfläche abgedichtet ist,
**dadurch gekennzeichnet, dass** an der Tür (1) mindestens ein Antriebselement (31, 34) angeordnet ist, mit dem die Dichtung (32, 34) unabhängig von der Schließ- oder Öffnungsbewegung der Tür (1) bzw. eines Türriegels von einer Dichtstellung, in der sie gegen die Bodenfläche anliegt, in eine Öffnungsstellung, in der sie einen Abstand zur Bodenfläche aufweist, gebracht wird.

2. Vorrichtung nach Anspruch 1, **dadurch gekennzeichnet, dass** das Antriebselement aus folgender Gruppe ausgewählt ist:
• pneumatisches Antriebselement, insbesondere ein Pneumatikzylinder (31);
• elektrisches Antriebselement, insbesondere Elektromotor;
• hydraulisches Antriebselement.

3. Vorrichtung nach Anspruch 2, **dadurch gekennzeichnet, dass** an der Tür (1) eine Dichtleiste (32) angeordnet ist, die durch das pneumatische Antriebselement (31) angehoben und abgesenkt wird.

4. Vorrichtung nach Anspruch 2 oder 3, **dadurch gekennzeichnet, dass** an der Tür (1) mindestens eine Rückstellfeder (33) angeordnet ist, welche die Dichtleiste (32) in die Öffnungsstellung zieht.

5. Vorrichtung nach einem der vorangehenden Ansprüche, **dadurch gekennzeichnet, dass** das pneumatische Antriebselement ein aufblasbarer Dichtschlauch (34) ist, welcher durch Aufblasen seinen Durchmesser vergrößert und in die Dichtstellung gebracht wird, und welcher und durch Ablassen der Luft in die Öffnungsstellung gebracht wird.

6. Vorrichtung nach einem der vorangehenden Ansprüche, **dadurch gekennzeichnet, dass** an der Tür (1) mindestens ein Antriebselement angeordnet ist, mit dem die Dichtung an einem seitlichen oder oberen Rand der Tür (1) von einer Dichtstellung, in der sie gegen die gegenüberliegende Dichtfläche des Gehäuses anliegt, in eine Öffnungsstellung, in der sie einen Abstand zur gegenüberliegenden Dichtfläche aufweist, gebracht wird.

7. Vorrichtung nach einem der vorangehenden Ansprüche, **gekennzeichnet durch** folgende Merkmale:
• ein Riegelelement (13) ist an der Tür (1) beweglich angeordnet,
• an dem Gehäuse (4) ist ein Widerlager für das Riegelelement (13) angeordnet,
• einer Betätigungsvorrichtung bewegt das Riegelelement (13) von einer Schließstellung in eine Öffnungsstellung und zurück, wobei das Riegelelement (13) in der Schließstellung durch das Widerlager gehalten wird und in der Öffnungsstellung vom Widerlager gelöst ist,
• die Betätigungsvorrichtung ist ein pneumatisches Antriebselement (11, 11').

8. Vorrichtung nach Anspruch 7, **dadurch gekennzeichnet, dass** sie einen Signalgeber (21) umfasst, der bei der Bewegung der Tür (1) in ihre geschlossene Stellung ein Signal abgibt, das die Druckluftzufuhr zum pneumatischen Antriebselement (11, 11') aktiviert.

9. Vorrichtung nach einem der vorangehenden Ansprüche, **dadurch gekennzeichnet, dass** das Gehäuse (4) einen Druckluftanschluss aufweist, der mit einer externen Druckluftquelle verbindbar ist, und dass eine Druckluftleitung (10) von dem Druckluftanschluss zum pneumatischen Antriebselement (31, 34) für die Dichtung (32, 34) und/oder zum pneumatischen Antriebselement (11, 11') für das Riegelelement (13) verläuft.

10. Vorrichtung nach Anspruch 9, **dadurch gekennzeichnet, dass** die Tür (1) mittels eines Scharniers an dem Gehäuse (4) angelenkt ist und dass mindestens eine Druckluftleitung (10) durch das Scharnier verläuft.

11. Vorrichtung nach Anspruch 10, **dadurch gekennzeichnet, dass** das Scharnier eine Gelenkachse (6) aufweist, die die Tür am Gehäuse (4) drehbar lagert, wobei die Gelenkachse (6) hohl ist und wobei ein erstes Ende der Gelenkachse (6) mit dem Druckluftanschluss und ein zweites Ende der Gelenkachse mit dem pneumatischen Antriebselement (11, 11', 31, 34) verbunden ist.

12. Vorrichtung nach einem der vorangehenden Ansprüche 7 bis 11, **dadurch gekennzeichnet, dass** sie ein Rückstellelement (15, 15', 15") aufweist, welches das Riegelelement (13) in die Öffnungsstellung bewegt.

13. Vorrichtung nach Anspruch 12, **dadurch gekennzeichnet, dass** das Rückstellelement eine Rückstellfeder (15, 15', 15") ist.

14. Vorrichtung nach einem der Ansprüche 7 bis 13, **dadurch gekennzeichnet, dass** sie mindestens eins der folgenden Merkmale aufweist:
• das pneumatische Antriebselement (11') weist ein Entlüftungsventil (20) auf;
• das Entlüftungsventil (20) ist manuell durch mindestens einen Notschalter betätigbar;
• der Notschalter ist an einer Innenseite der Tür (1) angeordnet, welche bei geschlossener Tür (1) dem von dem Gehäuse (4) umschlossenen Innenraum zugewandt ist.

15. Vorrichtung nach einem der Ansprüche 7 bis 14, **dadurch gekennzeichnet, dass** sie ferner mindestens eine der folgenden Merkmalsgruppen aufweist:
• eine zusätzliche Verbindungsanordnung, welche mit einem Türgriff (5) verbindbar ist, so dass die Bewegung des Türgriffs (5) auf das Riegelelement (13) übertragen wird;
• ein erstes Kopplungselement, welches das pneumatische Antriebselement (11,11') mit dem Riegelelement verbindet und zum Trennen der Verbindung lösbar ausgebildet ist;
• ein zweites Kopplungselement, welches das Rückstellelement (15, 15', 15") mit dem Riegelelement verbindet und zum Trennen der Verbindung lösbar ausgebildet ist.
